# EUROPEAN PATENT SPECIFICATION

(11) **EP 3 210 942 B1**
(45) Date of publication and mention of the grant of the patent: **27.02.2019**
(21) Application number: 15852126.0
(22) Date of filing: 21.10.2015
(51) Int. Cl.: C03B 1/02, C03C 1/02, C03C 3/083, C03C 3/085, C03C 3/087, C03B 3/02

(54) **METHOD FOR PRODUCING GLASS RAW MATERIAL GRANULES, METHOD FOR PRODUCING MOLTEN GLASS, AND METHOD FOR PRODUCING GLASS ARTICLE**
VERFAHREN ZUR HERSTELLUNG VON KÖRNCHEN AUS GLASROHMATERIAL, VERFAHREN ZUR HERSTELLUNG VON GLASSCHMELZE UND VERFAHREN ZUR HERSTELLUNG EINES GLASARTIKELS
PROCÉDÉ DE PRODUCTION DE GRANULES DE MATIÈRE PREMIÈRE DE VERRE, PROCÉDÉ DE PRODUCTION DE VERRE FONDU ET PROCÉDÉ DE PRODUCTION D'ARTICLE EN VERRE

(30) Priority: 22.10.2014 JP 2014215345
(43) Date of publication of application: 30.08.2017
(73) Proprietor: AGC Inc., Tokyo 100-8405 (JP)
(72) Inventor: KUNISA, Yasuhiro, Tokyo 100-8405 (JP); SHINOHARA, Nobuhiro, Tokyo 100-8405 (JP); MIYAJIMA, Tatsuya, Tokyo 100-8405 (JP)
(74) Representative: Müller-Boré & Partner Patentanwälte PartG mbB
(86) International application number: PCT/JP2015/079737
(87) International publication number: WO 2016/063921

(56) References cited:
- GB-A- 1 303 414
- JP-A- S5 614 427
- JP-A- H03 228 831
- JP-A- 2014 094 841
- US-A- 4 031 175
- US-A1- 2014 130 547

## Description

The present invention relates to a method for producing glass raw material granules, a method for producing molten glass by using the glass raw material granules, and a method for producing a glass article.

In the production of glass, if raw material powder is scattered when introducing the raw material powder into a melting furnace, there will be such a problem that the homogeneity of the glass composition tends to be low, or the raw material tends to be wasted, and therefore, a method of using a raw material powder as preliminarily granulated, has been proposed.

The following Patent Document 1 discloses that, as a binder at the time of granulating glass raw material powder, boric acid, sodium hydroxide, calcium chloride, a combination of calcium chloride and boric acid, or a combination of boric acid and a polyhydric alcohol, is used. In an Example of producing granules by using boric acid as a binder, it is described that a glass batch material containing 0.3 wt% or 17.2 wt% aluminum hydroxide was used.

The following Patent Document 2 discloses a method wherein silica sand and caustic soda (sodium hydroxide) are preliminarily reacted at an elevated temperature, to form water-soluble silicates such as sodium metasilicate and sodium disilicate, and such silicates are utilized as a binder to produce granules. In this method, sand particles in which the water-soluble silicates were formed, were mechanically treated to remove the water-soluble silicates at least partially from the sand particles, and then, the rest of the raw material components was mixed, followed by granulation by adding water. As the rest of the raw material components, feldspar, naturally occurring silicates, lead silicate, alumina (aluminum oxide), borax or boric acid, lithium-containing mineral, lithium carbonate, potassium hydroxide, magnesite, barium carbonate and zinc oxide are disclosed.

The following Patent Document 3 discloses raw material compositions for use in the manufacture of alkali-free glass. Patent Document 4 discloses a glass batch pelletizing method. Patent Document 5 discloses a method for producing granules of glass raw materials which are used for producing molten glass and a method for producing a glass product.
Patent Document 1: JP-A-56-14427
Patent Document 2: JP S56/37176 B2
Patent Document 3: GB 1 303 414 A
Patent Document 4: US 4 031 175 A
Patent Document 5: US 2014/130547 A1

However, Patent Document 1 discloses only Examples of producing granules by using boric acid as a binder. Depending upon applications of glass, it may be preferred not to contain boron oxide, and a method capable of producing granules without using boric acid is desired.

In the method described in Patent Document 2, although it is possible to produce granules without using boric acid, it is necessary to mechanically process sand particles after reacting silica sand and caustic soda (sodium hydroxide), and the process is complex and cumbersome. In addition, highly reactive caustic soda is used in a large amount, whereby there is such a problem that equipment and instrument are likely to be corroded.

The present invention is to provide a method for producing glass raw material granules, capable of producing glass raw material granules without complicating the process even without using boric acid, a method for producing molten glass, and a method for producing a glass article.

The present invention includes the following embodiments.
[1] A method for producing glass raw material granules from a glass raw material composition comprising at least silica, an aluminum source and an alkali metal source, which has a step of granulating a glass raw material composition (A) comprising, as calculated as solid content, from 45 to 75 mass% of silica, from 3 to 30 mass% of aluminum hydroxide as the aluminum source, and from 0.4 to 4.6 mass% of an alkali metal hydroxide as the alkali metal source, in the presence of water.
[2] The method for producing glass raw material granules according to [1], wherein D50 representing an average particle size of the silica is from 5 to 350 µm.
[3] The method for producing glass raw material granules according to [2], wherein when the value of D50 of the silica is represented by x (µm), the content y (mass%) of the alkali metal hydroxide to the solid content mass of the glass raw material composition (A) satisfies y≦4.6 - 0.0071x.
[4] The method for producing glass raw material granules according to [1], wherein D50 representing an average particle size of the silica is from 200 to 350 µm, and the content of the alkali metal hydroxide to the solid content mass of the glass raw material composition (A) is from 0.4 to 2.1 mass%.
[5] The method for producing glass raw material granules according to [1], wherein D50 representing an average particle size of the silica is from 5 to 50 µm, and the content of the alkali metal hydroxide to the solid content mass of the glass raw material composition (A) is from 0.8 to 4.2 mass%.
[6] The method for producing glass raw material granules according to any one of [1] to [5], wherein a glass raw material composition is used whereby the composition of glass comprises, as represented by mass% based on oxides, SiO₂ in a content of from 55 to 75 mass%, Al₂O₃ in a content of from 3 to 25 mass%, at least one member selected from the group consisting of Li₂O, Na₂O and K₂O in a content in total of from 10 to 20 mass%, and at least one member selected from the group consisting of MgO, CaO, SrO and BaO in a content in total of from 0 to 25 mass%.
[7] The method for producing glass raw material granules according to any one of [1] to [6], wherein said alkali metal hydroxide contains sodium hydroxide.
[8] The method for producing glass raw material granules according to any one of [1] to [7], wherein D50 representing an average particle size of the glass raw material granules is from 412 µm to 2 mm.
[9] A method for producing molten glass, which has a step of producing glass raw material granules by the method as defined in any one of [1] to [8], and a glass melting step of heating the obtained glass raw material granules to form molten glass.
[10] The method for producing molten glass according to [9], wherein the glass melting step has a step of introducing the glass raw material granules onto the molten glass liquid surface in a melting furnace.
[11] The method for producing molten glass according to [9], wherein the glass melting step comprises a step of melting the glass raw material granules in a gas-phase atmosphere to form molten glass particles, and a step of gathering the molten glass particles to form molten glass.
[12] A method of producing a glass article by using the method for producing molten glass as defined in any one of [9] to [11], which has the glass melting step, a forming step of forming the obtained molten glass, and an annealing step of annealing the glass after forming.

According to the present invention, it is possible to produce good glass raw material granules without complicating the process even without using boric acid.

Therefore, it is suitable for the production of granules for producing glass with a composition containing no boron oxide.

According to the method for producing molten glass of the present invention, even in the case of molten glass with a composition containing no boron oxide, it is possible to produce good granules without complicating the process for producing the glass raw material granules and to produce molten glass by using such granules.

According to the method for producing a glass article of the present invention, even in the case of a glass article with a composition containing no boron oxide, it is possible to produce good granules without complicating the process for producing glass raw material granules, and to produce a glass article by using such granules.
Fig. 1 is a photograph of granules obtained in the production example in Ex. 1.
Fig. 2 is a photograph of granules obtained in the production example in Ex. 11.
Fig. 3 is a photograph of granules obtained in the production example in Ex. 14.
Fig. 4 is a photograph of granules obtained in the production example in Ex. 18.
Fig. 5 is a graph showing the relationship between D50 of silica sand and the content of sodium hydroxide to the glass raw material composition (A) in the respective production examples of granules.

In this specification, components of glass are represented by oxides such as SiO₂, Al₂O₃, Na₂O, etc. The content of each component to the entire glass (glass composition) is represented by a mass percentage on the basis of oxides, based on the mass of glass being 100%.

In this specification, "glass raw material" is raw material that becomes a constituent of glass, and "glass raw material composition" is a composition comprising a plurality of glass raw materials. The glass raw materials may, for example, be oxides or composite oxides, compounds which are convertible to oxides by thermal decomposition, etc. The compounds which are convertible to oxides by thermal decomposition may, for example, be hydroxides, carbonates, nitrates, sulfates, halides, etc.

In this specification, "granules" are one obtained by granulating a glass raw material composition. Such granules may be referred to also as "glass raw material granules".

In this specification, the composition of a glass raw material composition is represented by mass% calculated based on solid content. That is, it is represented by a mass percentage based on the solid content mass of the glass raw material composition being 100 mass%, and in a case where the glass raw material composition contains an aqueous solution, it is a composition including a solid content in the aqueous solution. Here, the solid content includes crystalized water.

In this specification, "D50" is an average particle size represented by a 50% diameter in cumulative fraction. D50 of glass raw material is a 50% diameter in volume based cumulative fraction measured by using a laser diffraction method. As the particle size measuring method according to a laser diffraction method, the method described in JIS Z8825-1 (2001) is used.

D50 of granules is a mass cumulative 50% median diameter measured by using e.g. a sieve.

### <Glass raw material composition (A)>

The glass raw material composition (A) comprises at least silica, an aluminum source and an alkali metal source.

### [Silica]

Silica is a compound which becomes a SiO₂ component being a network former of glass in a glass production process and thus is essential.

Silica may, for example, be silica sand, quartz, cristobalite or amorphous silica. One of them may be used alone, or two or more of them may be used in combination. Silica sand is preferred in that its high-quality raw material is easily available. They are used in a powder form.

The content of silica in the glass raw material composition (A) is from 45 to 75 mass%, preferably from 48 to 72 mass%, more preferably from 50 to 70 mass%. When the content of silica is at least 45 mass%, granules tend to be less likely to adhere to the wall surface, etc. of the granulator, whereby handling will be easy. In that granules tend to be less likely to adhere, the content of silica sand is more preferably at least 48 mass%, further preferably at least 50 mass%. When the content of silica is at most 75 mass%, the strength of granules tends to be high. In that the granules tend to be less likely to be collapsed, the content of silica is more preferably at most 72 mass%, further preferably at most 70 mass%.

D50 of silica is preferably from 5 to 350 µm. When D50 of silica is at least 5 µm, handling will be easy, and granulation will be easy. When it is at most 350 µm, homogeneous granules tend to be easily obtainable.

### [Aluminum source]

The aluminum source is a compound which becomes an Al₂O₃ component in the process for producing molten glass. Al₂O₃ is a component having an effect of e.g. stabilizing glass, and it is an essential component in aluminosilicate glass.

The aluminum source may, for example, be aluminum oxide, aluminum hydroxide, feldspar, etc. In the present invention, at least aluminum hydroxide is used in order to increase the strength of granules, but one or more other aluminum sources may be used in combination. They are preferably in a powder form.

In the solid content of the glass raw material composition (A), the content of aluminum hydroxide to be contained as the aluminum source is at least 3 mass%, preferably at least 5 mass%, more preferably at least 10 mass%. When the content of aluminum hydroxide is at least 3 mass%, good granules will be obtainable.

The upper limit value of the content of aluminum hydroxide to the glass raw material composition (A) is determined depending upon the glass composition to be obtained. For example, it is preferably at most 30 mass%, more preferably at most 25 mass%, in the glass raw material composition (A).

To the total of the aluminum source, the proportion of aluminum hydroxide is preferably from 13 to 100 mass%, more preferably from 20 to 100 mass%.

D50 of aluminum hydroxide is not particularly limited, but is preferably from 2 to 100 µm, more preferably from 5 to 60 µm. When D50 of aluminum hydroxide is at least the lower limit value in the above range, handling will be easy, and when it is at most the upper limit value in the above range, uniform granules tend to be easily obtainable.

### [Alkali metal source]

An alkali metal in the present invention refers to Na, K or Li. The alkali metal source is a compound which becomes a Na₂O, K₂O or Li₂O component in the process for producing molten glass. The alkali metal source may, for example, be carbonates, sulfates, nitrates, oxides, hydroxides, chlorides and fluorides of alkali metals. One of them may be used alone, or two or more of them may be used in combination. Sulfates, chlorides and fluorides of alkali metals may act as refining agents.

In the present invention, at least an alkali metal hydroxide is used in order to facilitate granulation. The alkali metal hydroxide may be used in a powder or granular form, or as an aqueous solution.

In the glass raw material composition (A), the content of the alkali metal hydroxide to be contained as the alkali metal source is from 0.4 to 4.6 mass%, preferably from 1.0 to 3.5 mass%. Within the above range, good granules will be obtainable. If the content of the alkali metal hydroxide is too small, grain growth in the granulating step tends to be insufficient. When the content of the alkali metal hydroxide is too large, the granules tend to agglomerate or tend to easily adhere to the apparatus or instrument, whereby the apparatus or instrument is likely to be corroded.

To the total of the alkali metal source, the proportion of the alkali metal hydroxide is preferably from 4 to 29 mass%, more preferably from 8 to 26 mass%. If the proportion of the alkali metal hydroxide is too small, grain growth in the granulating step tends to be insufficient. If the proportion of the alkali metal hydroxide is too large, the granules tend to agglomerate, and tend to easily adhere to the apparatus or instrument, whereby the apparatus or instrument is likely to be corroded.

As the alkali metal hydroxide, sodium hydroxide is preferred from the viewpoint of easy availability. In the total of the alkali metal hydroxide to be contained in the glass raw material composition (A), sodium hydroxide is preferably at least 50 mass%, more preferably at least 80 mass%, particularly preferably 100 mass%.

In order to prevent agglomeration of granules, it is preferred to use, in addition to the alkali metal hydroxide, an alkali metal carbonate as the alkali metal source. For example, sodium carbonate, potassium carbonate or lithium carbonate is preferred, and particularly, sodium carbonate (soda ash) is preferred in view of handling efficiency.

The content of an alkali metal carbonate in the glass raw material composition (A) is preferably at most 30 mass% as calculated as solid content, since it is thereby possible to increase the strength of the granules.

D50 of the alkali metal carbonate is not particularly limited, but is preferably from 50 to 400 µm, more preferably from 55 to 120 µm. When D50 of the alkali metal carbonate is in the above range, homogeneous granules tend to be easily obtainable.

In the case of using alkali metal carbonates, the total content of alkali metal carbonates in the glass raw material composition (A) is preferably from 5 to 30 mass%, more preferably from 10 to 26 mass%.

### [Alkaline earth metal source]

The glass raw material composition (A) may contain an alkaline earth metal source in addition to the above components.

An alkaline earth metal in the present specification refers to Mg, Ca, Ba or Sr. The alkaline earth metal source is a compound which forms MgO, CaO, BaO or SrO in the process for producing molten glass. The alkaline earth metal source may, for example, be carbonates, sulfates, nitrates, oxides, hydroxides, chlorides and fluorides of alkaline earth metals. One of them may be used alone, or two or more of them may be used in combination. The alkaline earth metal source is preferably a powder. Sulfates, chlorides and fluorides of alkaline earth metals may act as refining agents.

Further, a composite carbonate such as dolomite, or a composite oxide such as calcined dolomite, may also be used.

As the alkaline earth metal source, it is preferred to use an alkaline earth metal oxide or alkaline earth metal hydroxide.

In the case of using an alkaline earth metal source, the content of the alkaline earth metal source to the glass raw material composition (A) is preferably from 2 to 13 mass%, more preferably from 5 to 9 mass%. Within the above range, it will be easy to obtain granules with high strength.

### [Other glass raw materials]

The glass raw material composition (A) may contain, within a range not to impair the effects of the present invention, other compounds known as glass raw materials. As such other compounds, tin oxide, titanium oxide, zirconium oxide, zircon, cerium oxide, antimony oxide, iron oxide, cobalt oxide, chromium oxide, copper oxide, nickel oxide, etc. may be mentioned. One of them may be used alone, or two or more of them may be used in combination. In order to obtain homogeneous granules with high strength, the content in total of such other compounds, is preferably at most 20 mass%, more preferably at most 10 mass%, to the glass raw material composition (A).

Iron oxide, cobalt oxide, chromium oxide, copper oxide, nickel oxide, etc., may be used as coloring agents. Antimony oxide, tin oxide, etc. may be used as refining agents. One of them may be used alone, or two or more of them may be used in combination.

### [Composition of glass raw material composition (A)]

The composition of the glass raw material composition (A) is adjusted to be substantially the same as the composition of a desired glass article, as calculated as oxides, except for components to be volatilized in the glass melting step.

As shown in Production Examples for granules as described later, by incorporating silica, aluminum hydroxide and an alkali metal hydroxide in predetermined proportions, it is possible to produce granules with good strength by the method for granulating the glass raw material composition (A) in the presence of water.

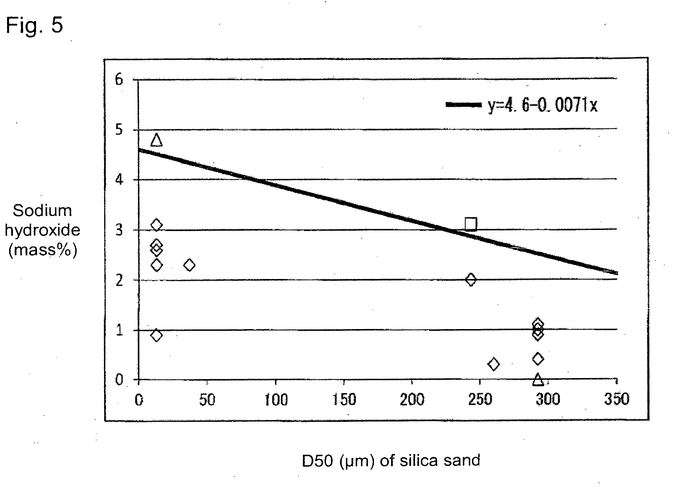

Further, as shown in Fig. 5 as described later, it is possible to well prevent agglomeration of granules in such a range that y≦4.6 - 0.0071x is satisfied, where x (unit: µm, 5≦x≦350) is the value of D50 of the silica, and y (unit: mass%, 0.4≦y≦4.6) is the content of the alkali metal hydroxide in the glass raw material composition (A). Particularly, in the case where the alkali metal hydroxide is sodium hydroxide, good results are obtainable.

Particularly preferred is a range where D50 of silica is from 200 to 350 µm, and the content of the alkali metal hydroxide is from 0.4 to 2.1 mass%, or a range where D50 of silica is from 5 to 50 µm, and the content of the alkali metal hydroxide is from 0.8 to 4.2 mass%. Within such a range, y≦4.6 - 0.0071x is satisfied, whereby agglomeration of granules will be prevented, and it tends to be easy to obtain homogeneous granules.

The reason as to why granules having good strength are obtainable by the production method of the present invention is not clearly understood, but it is considered that in the granulating step, the alkali metal hydroxide and aluminum hydroxide are reacted in the presence of water, whereby aluminate ions will be formed and will be reacted with Si-OH on the silica surface to exhibit water curability.

The composition other than silica, aluminum hydroxide and the alkali metal hydroxide, of the glass raw material composition (A), is not particularly limited and may be set depending on the composition of the desired glass article.

By the method of the present invention, it is possible to produce good granules without complicating the process even without using boric acid, and therefore, the method is particularly useful for the production of granules which is to be used for producing glass with a composition containing no B₂O₃. In the composition of glass obtainable from the glass raw material composition (A), the content of B₂O₃ is preferably at most 3 mass%, more preferably at most 0.5 mass%, and particularly preferably, no B₂O₃ is contained other than unavoidable impurities.

Further, it is preferred that the content of phosphorus oxide in the glass raw material composition (A) is small, since it is thereby possible to easily obtain homogeneous granules. If the content of phosphorus oxide is large, there may be a case where glass raw material would rapidly agglomerate. In the composition of glass obtainable from the glass raw material composition (A), the content of P₂O₅ is preferably at most 3 mass%, more preferably at most 0.5 mass%, and particularly preferably, no P₂O₅ is contained other than unavoidable impurities.

For example, when the granules obtained by the above-described method for producing glass raw material granules, are used, it is possible to preferably obtain glass having the following composition.

That is, it is possible to obtain glass comprising:
SiO₂ in a content of from 55 to 75 mass%,
Al₂O₃ in a content of from 3 to 25 mass%,
at least one member selected from the group consisting of Li₂O, Na₂O and K₂O, in a content in total of from10 to 20 mass%, and
at least one member selected from the group consisting of MgO, CaO, SrO and BaO, in a content in total of from 0 to 25 mass%.

Particularly, in such a composition of glass, contents of the respective components are as follows.

The content of SiO₂ is more preferably from 60 to 70 mass%.

The content of Al₂O₃ is more preferably from 9 to 20 mass%.

The content of at least one member selected from the group consisting of Li₂O, Na₂O and K₂O is more preferably from 11 to 19 mass%.

The content in total of at least one member selected from the group consisting of MgO, CaO, SrO and BaO is more preferably from 1 to 15 mass%.

The content in total of at least one member selected from the group consisting of ZrO₂ and TiO₂ is more preferably from 0 to 4 mass%.

The content of Fe₂O₃ is more preferably from 0 to 9 mass%.

The content of Co₃O₄ is more preferably from 0 to 2 mass%.

### [Particle size of granules]

The average particle size (D50) of granules is not particularly limited, but from the viewpoint of preventing scattering of raw material, it is preferably at least 412 µm, more preferably at least 500 µm. Further, from the viewpoint of melting efficiency, it is preferably at most 2 mm, more preferably at most 1.5 mm.

The size of granules is suitably selected within the above range depending on the method for producing molten glass using the granules.

In a case where granules are to be used in a method of melting them by a melting method other than the in-flight melting method as described later, when the average particle size (D50) of granules is at least 1 mm, generation of bubbles in molten glass can easily be prevented.

In the case of melting granules by the in-flight melting method, the average particle size (D50) of granules is preferably at most 1,000 µm, more preferably at most 800 µm. When the average particle size of granules is at most 1,000 µm, at the time of melting them in the in-flight heating apparatus, vitrification proceeds sufficiently into inside of granules, such being preferred.

### <Method for producing granules>

The method for producing granules of the present invention has a granulation step of granulating the glass raw material composition (A) in the presence of water. As the case requires, it preferably has a heat-drying step of further heating and drying.

As a method of supplying water to the glass raw material composition (A), a method may be used wherein a portion of the glass raw material composition (A) is added in the form of an aqueous solution.

The granulation step may be carried out by suitably using a known granulation method. For example, a tumbling granulation method, an agitation granulation method, a compression granulation method, a spray drying granulation method, or a method of crushing a molded body obtained by compression molding, is preferably used. A tumbling granulation method is preferred in that it is thereby possible to readily produce homogeneous granules with a relatively small particle size.

### [Tumbling granulation method]

The tumbling granulation method is a granulation method in which a container containing a raw material having water and a binding agent added to a powder, is rotated so that powder particles are tumbled on the wall surface, etc. whereby around the particles as cores, other particles are attached for grain growth. The container for the tumbling granulation may be provided with stirring blades or choppers. Overgrown granules will be disintegrated by the stirring blades or choppers, so that granules with a proper size will be obtained.

As the tumbling granulation method, preferred is, for example, a method in which a powder among the glass raw material composition (A) is put into the container of the tumbling granulator, and while the container is vibrated and/or rotated to mix and stir the raw material powder, a predetermined amount of water is sprayed to the raw material powder, for granulation.

The container for the tumbling granulator may, for example, be a pan, cylindrical or conical rotary container, or a vibration-type container, and is not particularly limited.

The tumbling granulator is not particularly limited, but, it is possible to use, for example, one provided with a container that rotates with a rotational axis in a direction inclined to the vertical direction, and a rotary blade that rotates in the opposite direction to the container about its rotational axis in the container. As such a tumbling granulation apparatus, in particular, Eirich Intensive Mixer (trade name: manufactured by Nippon Eirich Co., Ltd.) may be mentioned.

The sequential order of introducing glass raw materials into the apparatus is not particularly limited, but a method of preliminarily mixing a powder comprising silica and aluminum hydroxide, followed by adding sodium hydroxide solution, or a method of adding granular sodium hydroxide and water, is preferred in that it is thereby possible to prevent local agglomeration.

With respect to the amount of water, if it is too large, it takes a long time for drying, but if it is too small, strength of the granules tends to be inadequate, and therefore, it is preferred to set it so that these disadvantages do not occur.

For example, relative to 100 parts by mass of the solid content in total of the glass raw material composition (A), the amount of water present during the granulation is preferably from 5 to 25 parts by mass, more preferably from 6 to 20 parts by mass.

If the amount of water relative to the solid content of the glass raw material composition (A) is insufficient, strong granules tend to be hardly obtainable, and if it is excessive, at the time of mixing, granules tend to adhere to the surface of a device such as a mixer.

The particle size of the granules may be adjusted by the stirring intensity or stirring time.

After granulation by a tumbling granulator, it is preferred to heat and dry the obtained particles. It may be carried out by a known heating and drying method. For example, by using a hot air dryer, a method of heating at a temperature of from 100°C to 200°C for from 1 to 12 hours, may be used.

### [Spray drying granulation method]

The spray-drying granulation method may be carried out by a known method. For example, by using a stirring device such as a ball mill, the glass raw material composition (A) and water are supplied to prepare a slurry, and by using a spraying device such as a spray dryer, the slurry is sprayed, dried and solidified in a high temperature atmosphere of e.g. about from 200 to 500°C to obtain granules.

The amount of water in the slurry is preferably from 60 to 400 parts by mass, more preferably from 100 to 200 parts by mass, relative to 100 parts by mass of the solid content.

### <Method for producing molten glass>

The method for producing molten glass of the present invention has a glass melting step (hereinafter referred to also as a melting step) of heating the granules obtainable by the present invention to form molten glass. The melting step may be carried out by using a crucible furnace or a glass melting furnace of Siemens-type, or it may be carried out by electric melting. Either method may be conducted by a known method.

### [Melting step]

In a case where molten glass is already present in a glass melting furnace, the melting step is a step of introducing the granules on the liquid surface, and the mass of the granules (referred to also as a batch pile) is heated by a burner, etc., to let fusion proceed from the surface of the mass to let molten glass be gradually formed.

Alternatively, the granules are put into a raw material layer formed on a molten glass liquid surface, and fusion is allowed to proceed from the portion in contact with the molten glass heated by an electric melting, etc. to let molten glass be gradually formed.

In such a case as producing a large amount of glass by using a large-scale apparatus, it is carried out to introduce a mixture of a raw material batch and cullet obtained by crushing e.g. glass plate. Granules of the present invention have high intensity, and therefore, even in a case where a raw material batch composed of the granules of the present invention is introduced as mixed with cullet, they are less likely to be broken, such being preferred.

### [In-flight melting method]

A method for producing molten glass in one embodiment of the present invention, may have a step of forming the granules of the present invention into molten glass particles by an in-flight melting method, and a step of gathering the molten glass particles to form molten glass.

Specifically, first, the granules are introduced into a hot gas phase atmosphere in an in-flight heating device. As the in-flight heating device, a known one may be used. Granules of the present invention are excellent in strength, and therefore, even if collision of the particles to one another, or the particles to e.g. a conveying path inner wall, occurs during the transportation or during the introduction, formation of fine powder is prevented.

Then, molten glass particles melted in the in-flight heating device are gathered to obtain molten glass, and the molten glass taken out from the device will be supplied to a subsequent forming step. The method of gathering the molten glass particles may, for example, be a method in which molten glass particles permitted to fall in the gas phase atmosphere by its own weight, are received and gathered in a heat-resistant container provided at a lower portion in the gas-phase atmosphere.

### <Method for producing glass article>

The method for producing a glass article of the present invention is a method for producing a glass article by using the method of producing molten glass of the present invention.

First, molten glass obtained by the melting step is formed into a desired shape in a forming step, followed by annealing in an annealing step, as the case requires. After that, a post-processing such as cutting, polishing, etc. may be conducted in a post-processing step, in a known manner, as the case requires, to obtain a glass article.

In a case where the glass article is plate-shaped, the forming step may be conducted by a known method such as a float process, a down draw method, a fusion process, to form the desired shape, followed by annealing as the case requires, to obtain a glass article.

### EXAMPLES

The present invention will be described in further detail with reference to the following Examples, but the present invention is not limited thereto. Ex. 1 to 7, Ex. 11 to 13, Ex. 15 to 17 and 19 are Examples of the present invention, and Ex. 8 to 10, Ex. 14 and Ex. 18 are Comparative Examples.

### <Production Examples 1 to 19>

### [Glass Composition]

As the glass composition, 5 types i.e. glass materials1 to 5 as shown in Table 1 were used. The glass composition of Table 1 is represented by values (unit: mass%) calculated as oxides.

**[Table 1]**

| | | SiO₂ | Al₂O₃ | MgO | CaO | ZrO₂ | Na₂O | K₂O | Fe₂O₃ | Co₃O₄ | Li₂O |
|---|---|---|---|---|---|---|---|---|---|---|---|
| Glass composition [mass%] | Glass material 1 | 60.8 | 12.9 | 6.9 | 0.0 | 0.9 | 12.4 | 6.1 | 0.0 | 0.0 | 0.0 |
| | Glass material 2 | 64.8 | 16.1 | 5.2 | 0.0 | 0.0 | 13.4 | 0.5 | 0.0 | 0.0 | 0.0 |
| | Glass material 3 | 64.3 | 9.1 | 6.0 | 0.0 | 0.0 | 11.1 | 0.0 | 8.1 | 1.4 | 0.0 |
| | Glass material 4 | 61.8 | 18.4 | 0.0 | 0.0 | 3.5 | 5.4 | 5.0 | 0.1 | 0.0 | 5.8 |
| | Glass material 5 | 72.0 | 1.8 | 4.0 | 8.4 | 0.0 | 13.1 | 0.6 | 0.1 | 0.0 | 0.0 |

### [Formulation of the glass raw material]

As the formulation, 19 types of Ex. 1 to 19 as shown in Tables 2 and 3 were used. The formulation shown in the Tables is a composition (mass%) calculated as solid content of a glass raw material composition (A). In the following Formulation Examples, except for a case where a caustic soda solution was used as sodium hydroxide, powder raw materials were used in all cases, and therefore, the composition (mass%) shown in the Tables is proportions of the respective raw materials to the total of all powder raw materials, unless a caustic soda solution was used. In the case where a caustic soda solution was used, the amount of sodium hydroxide contained in the caustic soda solution was taken as a solid content for calculation of the value (unit: mass%) calculated as solid content.

Further in Tables 2 and 3, the type (glass material 1 to 5) of glass composition in each Ex. and a value represented by 4.6 - 0.0071x, where x (µm) is the value of the D50 of silica (silica sand), are shown.

As silica sand, four types with D50 being 13.1 µm, 36.8 µm, 243.3 µm and 292.7 µm, were used.

As aluminum hydroxide, three types with D50 being 7.0 µm, 60.0 µm and 100.0 µm, were used.

As sodium carbonate, two types with D50 being 83.0 µm and 399.4 µm, were used.

D50 of other raw material powders was as follows.
D50 of aluminum oxide: 7 µm,
D50 of magnesium hydroxide: 4 µm,
D50 of magnesium oxide: 4.8 µm,
D50 of zircon (ZrSiO₄): 12 µm,
D50 of potassium carbonate: 563 µm,
D50 of calcium hydroxide: 0.4 µm,
D50 of lithium carbonate: 8.2 µm.

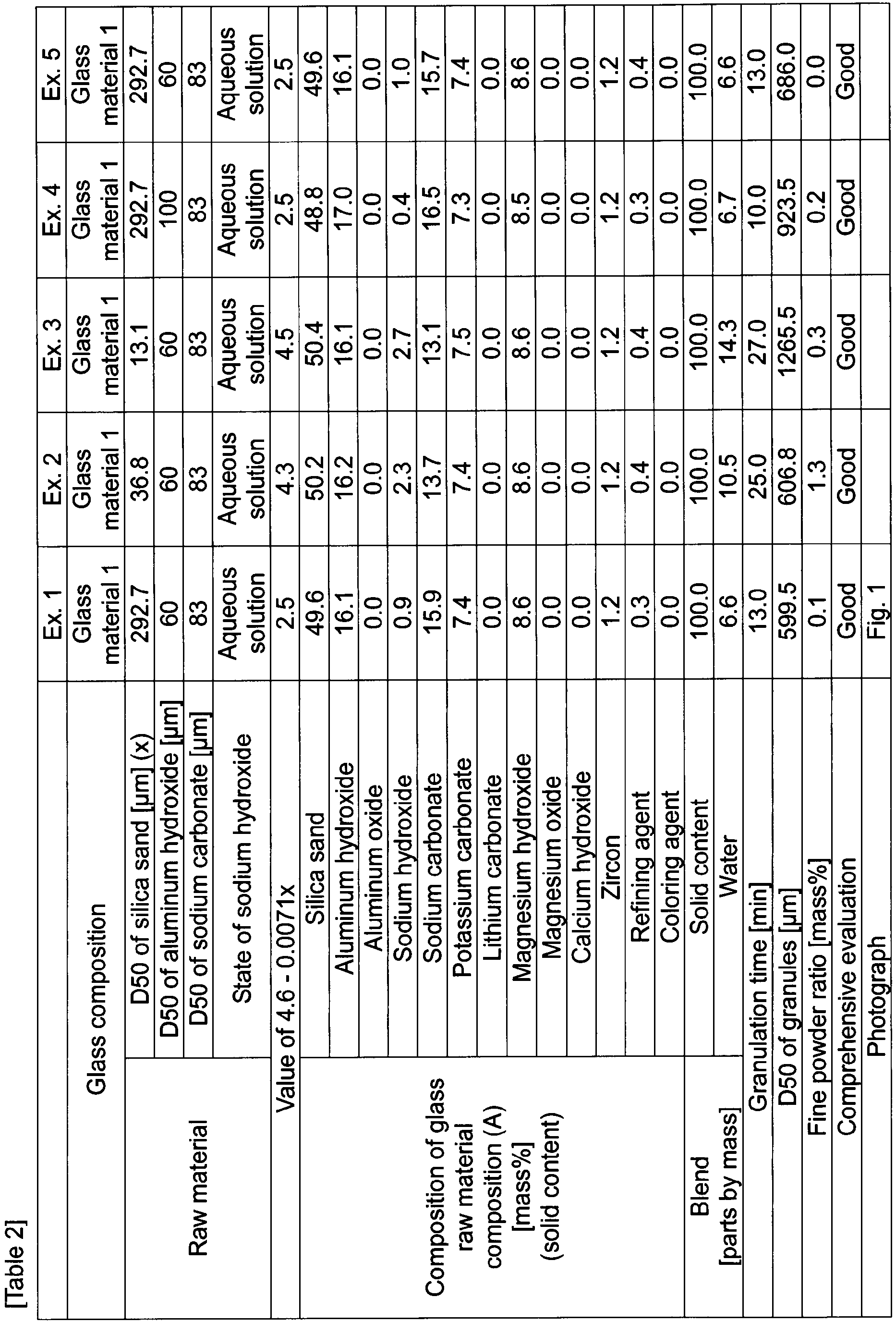

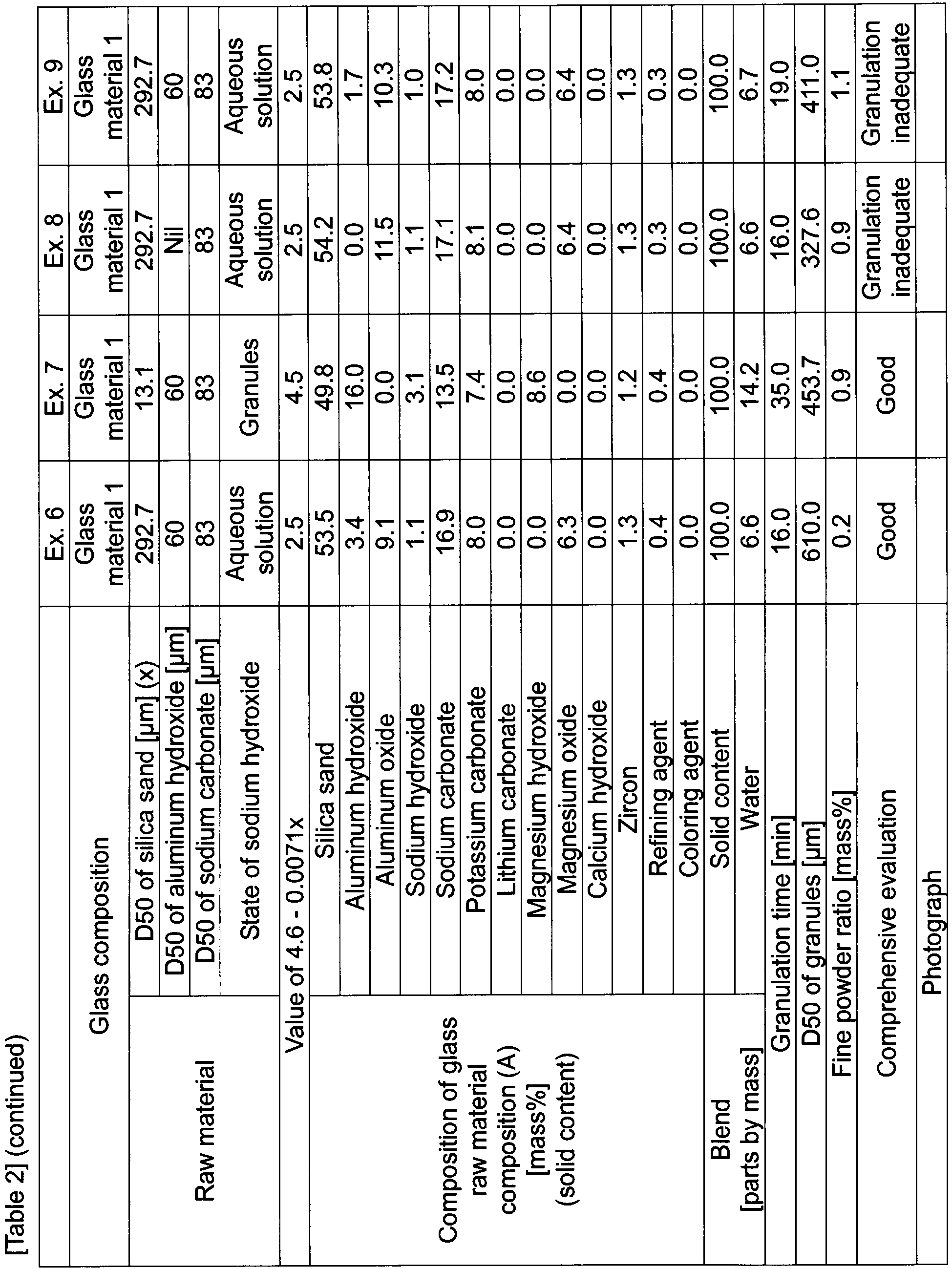

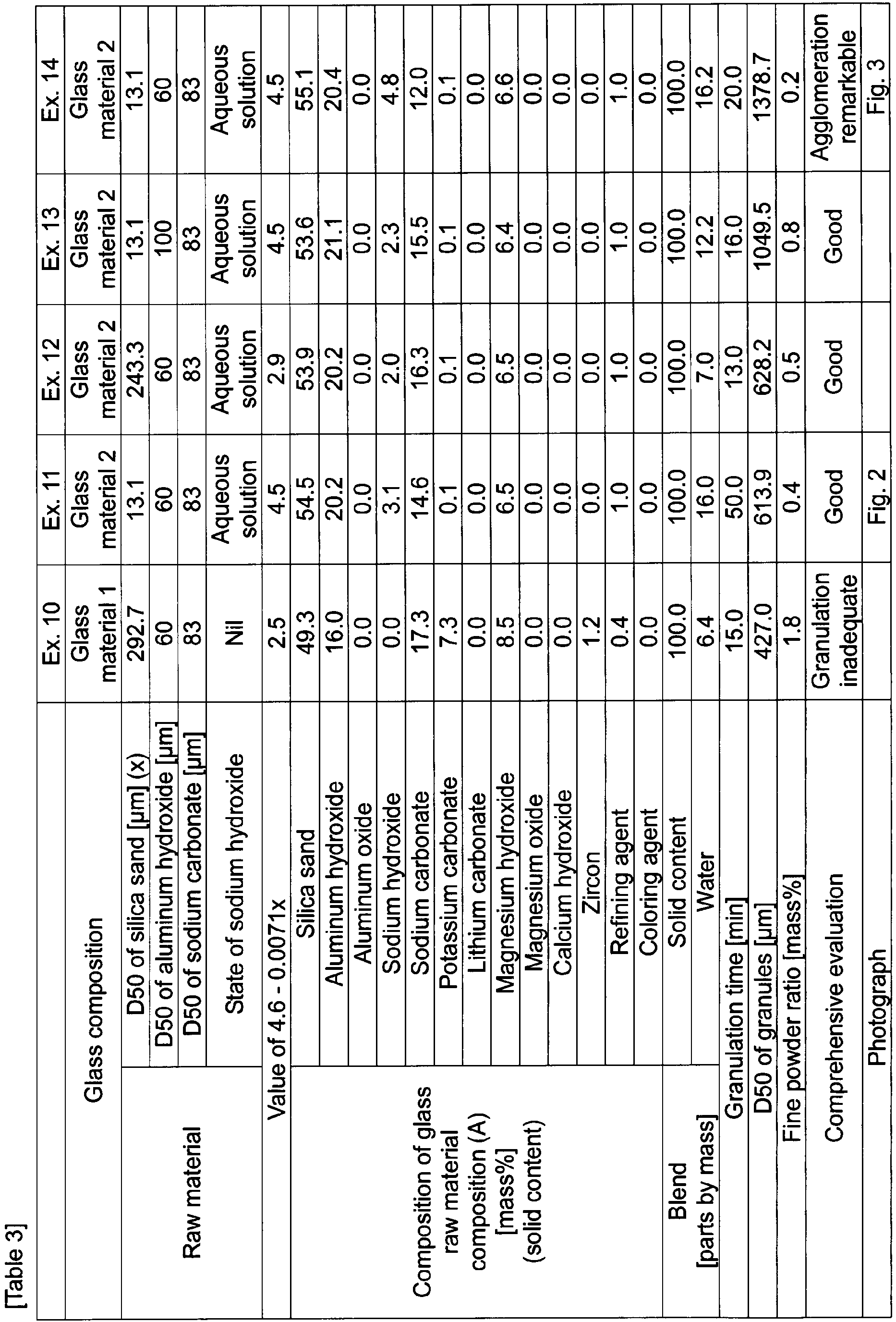

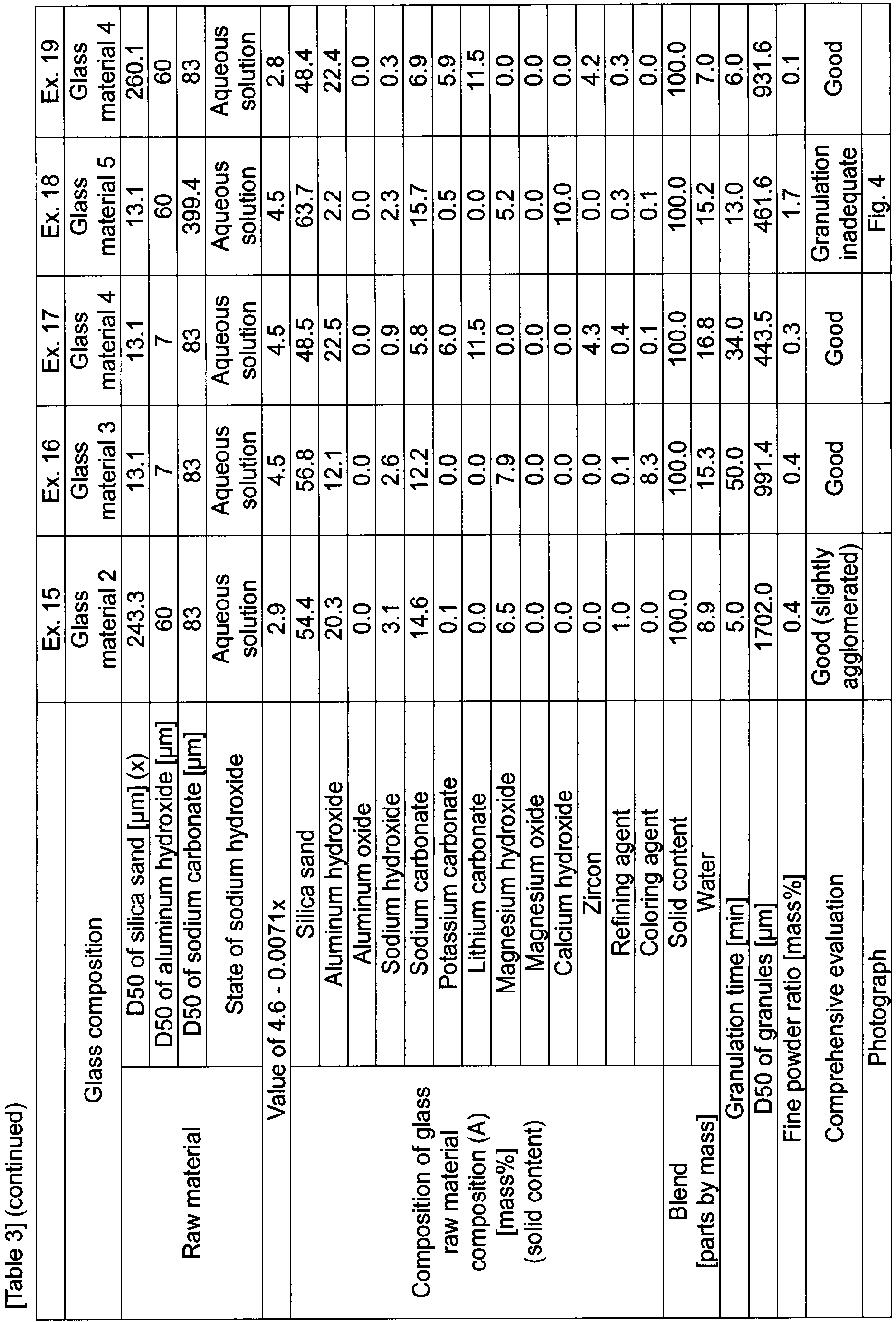

### [Production of granules]

Using the glass raw material composition (A) of the formulation as shown in the column for glass raw material composition in Tables 2 and 3, granules were produced under conditions shown in Tables 2 and 3.

As a granulator, Eirich Intensive Mixer (product name, manufactured by Nippon Eirich Co., Ltd., Model: R02 type, capacity: 5 L, rotor: star type) was used.

In Table 2 and 3, the state of the sodium hydroxide being "aqueous solution" means that a caustic soda solution at a concentration of 48 mass% (hereinafter referred to as a 48% sodium hydroxide aqueous solution) was used, and "granules" means that solid (granular) sodium hydroxide was used.

Blend in Table 2 and 3 represents parts by mass to the total 100 parts by mass of solid contents (including the solid content in the aqueous sodium hydroxide solution) in the glass raw material composition (A).

Water includes water contained in a 48% sodium hydroxide aqueous solution.

### (Ex. 1)

Preliminarily prepared was 235 g of a mixture (hereinafter referred to as a sodium hydroxide-containing diluent) having 161 g of water and 74 g of a 48% aqueous sodium hydroxide solution mixed.

Of the formulation shown in Table 2, 2,972 g of powder raw materials except sodium hydroxide, were put in a granulator and pre-mixed for 60 seconds at a panning rotational speed of 42 rpm at a rotor rotational speed of 900 rpm. After the pre-mixing, while maintaining the panning rotational speed of 42 rpm, 235 g of the sodium hydroxide-containing diluent was charged. Then, the rotor rotational speed was adjusted to 3,000 rpm, followed by granulation for 13 minutes, whereupon the product was taken out from the granulator and dried in a tray type dryer at a temperature of the heating chamber at 120°C for 15 hours to obtain granules.

With respect to the obtained granules, by means of an automatic sieving measuring instrument (manufactured by Seishin Enterprise Co., Ltd., product name: Robot Shifter, RPS-105), the particle size distribution and the average particle size (D50) were measured. Measurement results of D50 are shown in the Table. D50 being too small means that grain growth was insufficient. D50 being too large means that agglomeration of particles with one another occurred.

Further, 15 g of the obtained granules were shaken by a shaker (manufactured by AS ONE Co., Ltd., product name: AS-1N) for 60 minutes (simulated destruction test), whereupon the content (unit: mass%) of fine powder of less than 106 µm was measured by an automatic sieving measuring instrument. The results are shown in the Table. The lower the fine powder ratio, the higher the strength of the granules.

As a comprehensive evaluation, a case where the grain growth was good without agglomeration, and fine powder was less, was judged to be "good". The results are shown in the Table.

### (Ex. 2 to 19)

Granules were produced in the same manner as in Ex. 1 except that the production conditions were changed as shown in Tables 2 and 3. With respect to the obtained granules, the measurements and evaluations were conducted in the same manner as in Ex. 1. The results are shown in the Tables.

In Ex. 7, after the pre-mixing, in a state where the panning rotational speed was maintained at 42 rpm, instead of the sodium hydroxide containing diluent, the entire amount of granular sodium hydroxide and water were charged.

Ex. 8 is an example in which aluminum hydroxide was not blended, Ex. 9 is an example in which the amount of aluminum hydroxide was small, Ex. 10 is an example in which sodium hydroxide was not blended, Ex. 14 is an example in which the amount of sodium hydroxide was large, and Ex. 18 is an example for a raw material for soda lime glass with a small Al₂O₃ content and in which the blend amount of aluminum hydroxide was small.

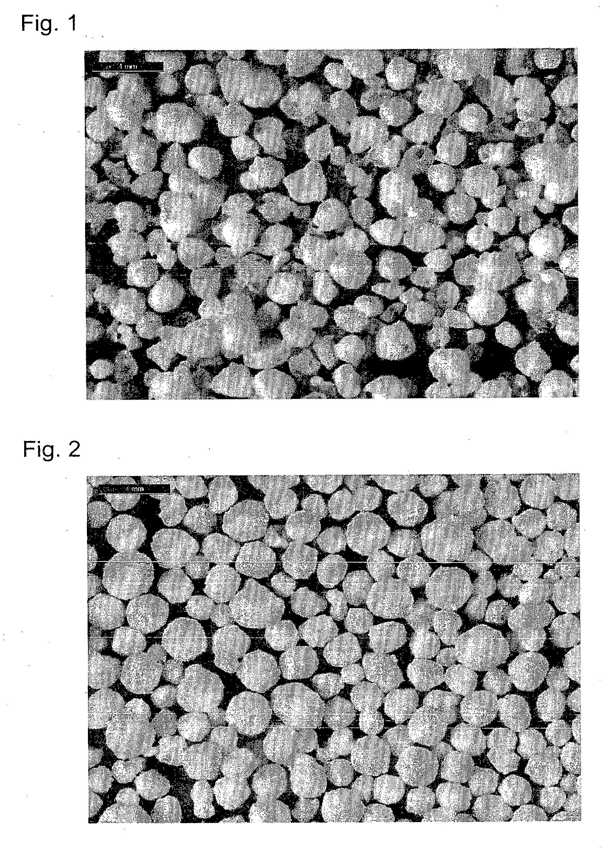

Photographs of granules obtained in Ex. 1, 11, 14 and 18, are shown in Figs. 1 to 4, respectively.

As shown from the results in Tables 2 and 3, in Ex. 1 to 7, Ex. 11 to13, Ex. 15 to 17 and 19, even by formulations using no boric acid, it was possible to obtain granules having a low fine powder ratio and good strength, by a simple process of conducting granulation by putting the raw materials and water to a granulator. Among them, in granules in Ex. 15, agglomeration was slightly observed.

In Ex. 8 in which no aluminum hydroxide was blended, in Ex. 9 in which the blend amount of aluminum hydroxide was small, and in Ex. 10 in which no sodium hydroxide was blended, grains did not grow sufficiently in the granulating step, whereby the fine grains remained, and the value of D50 of granules was small. Also, the fine powder ratio was high, and the strength of the granules was insufficient.

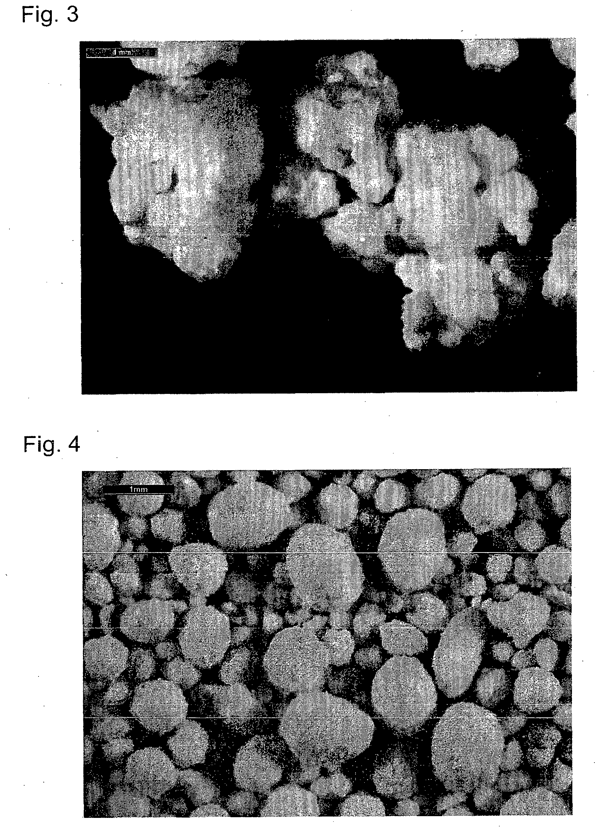

In Ex. 14 in which the blend amount of sodium hydroxide was large, agglomeration of particles was remarkable, as shown in Fig. 3.

In Ex. 18 in which the blend amount of aluminum hydroxide was small, the fine powder ratio was high, and the strength of the granules was inadequate.

Fig. 5 is a graph showing a relationship, with respect to Ex. 1 to 7 and 10 to 17 and 19, between the content (vertical axis) of sodium hydroxide in the glass raw material composition (A) and the value of D50 (horizontal axis) of silica sand used in the glass raw material composition (A).

Ex. 1 to 7, Ex. 11 to 13, Ex.16 to 17 and 19 in which particularly good granules were obtained, were shown by ◊, Ex. 10 and 14 in which the production was inferior, was shown by Δ, and Ex. 15 in which agglomeration was slightly observed, was shown by □.

From these results, it is evident that agglomeration of granules tends to be easily prevented in such a range that y≦4.6 - 0.0071x, where x (unit: µm, 5≦x≦350) is a value of D50 of silica (silica sand), and y (unit: mass%, 0.2≦y≦4.6) is the content of the alkali metal hydroxide (sodium hydroxide), such being particularly preferred.

According to the method for producing molten glass of the present invention, even with molten glass of a composition not containing boron oxide, it is possible to produce good granules without complicating the production process of the glass raw material granules, and it is possible to produce molten glass by using such granules. Further, at the time of melting the glass raw material granules, it is possible to prevent disintegration of the granules thereby to prevent formation of fine powder, and at the same time, it is possible to prevent agglomeration of the granules. Thus, the glass raw material granules obtained by the production method of the present invention are easily transported, are less likely to form fine powder even when transported or introduced into a high temperature gas phase atmosphere, and are useful for the production of glass by an in-flight melting method, or for the production of glass by using other glass melting furnaces.

## Claims

1. A method for producing glass raw material granules from a glass raw material composition comprising at least silica, an aluminum source and an alkali metal source, which has a step of granulating a glass raw material composition (A) comprising, as calculated as solid content, from 45 to 75 mass% of silica, from 3 to 30 mass% of aluminum hydroxide as the aluminum source, and from 0.4 to 4.6 mass% of an alkali metal hydroxide as the alkali metal source, in the presence of water.

2. The method for producing glass raw material granules according to Claim 1, wherein D50 representing an average particle size of the silica is from 5 to 350 µm.

3. The method for producing glass raw material granules according to Claim 2, wherein when the value of D50 of the silica is represented by x (µm), the content y (mass%) of the alkali metal hydroxide to the solid content mass of the glass raw material composition (A) satisfies y≦4.6 - 0.0071x.

4. The method for producing glass raw material granules according to Claim 1, wherein D50 representing an average particle size of the silica is from 200 to 350 µm, and the content of the alkali metal hydroxide to the solid content mass of the glass raw material composition (A) is from 0.4 to 2.1 mass%.

5. The method for producing glass raw material granules according to Claim 1, wherein D50 representing an average particle size of the silica is from 5 to 50 µm, and the content of the alkali metal hydroxide to the solid content mass of the glass raw material composition (A) is from 0.8 to 4.2 mass%.

6. The method for producing glass raw material granules according to any one of Claims 1 to 5, wherein a glass raw material composition is used whereby the composition of glass comprises, as represented by mass% based on oxides, SiO₂ in a content of from 55 to 75 mass%, Al₂O₃ in a content of from 3 to 25 mass%, at least one member selected from the group consisting of Li₂O, Na₂O and K₂O in a content in total of from10 to 20 mass%, and at least one member selected from the group consisting of MgO, CaO, SrO and BaO in a content in total of from 0 to 25 mass%.

7. The method for producing glass raw material granules according to any one of Claims 1 to 6, wherein said alkali metal hydroxide contains sodium hydroxide.

8. The method for producing glass raw material granules according to any one of Claims 1 to 7, wherein D50 representing an average particle size of the glass raw material granules is from 412 µm to 2 mm.

9. A method for producing molten glass, which has a step of producing glass raw material granules by the method as defined in any one of Claims 1 to 8, and a glass melting step of heating the obtained glass raw material granules to form molten glass.

10. The method for producing molten glass according to Claim 9, wherein the glass melting step has a step of introducing the glass raw material granules onto the molten glass liquid surface in a melting furnace.

11. The method for producing molten glass according to Claim 9, wherein the glass melting step comprises a step of melting the glass raw material granules in a gas-phase atmosphere to form molten glass particles, and a step of gathering the molten glass particles to form molten glass.

12. A method of producing a glass article by using the method for producing molten glass as defined in any one of Claims 9 to 11, which has the glass melting step, a forming step of forming the obtained molten glass, and an annealing step of annealing the glass after forming.

## Patentansprüche

1. Verfahren zur Herstellung von Glasrohstoffgranalien aus einer Glasrohstoffzusammensetzung, die mindestens Siliziumdioxid, eine Aluminiumquelle und eine Alkalimetallquelle umfasst, das einen Schritt des Granulierens einer Glasrohstoffzusammensetzung (A) aufweist, die, berechnet als Feststoffgehalt, 45 bis 75 Massen-% Siliziumdioxid, 3 bis 30 Massen-% Aluminiumhydroxid als die Aluminiumquelle und 0,4 bis 4,6 Massen-% eines Alkalimetallhydroxids als die Alkalimetallquelle umfasst, in Gegenwart von Wasser.

2. Verfahren zur Herstellung von Glasrohstoffgranalien nach Anspruch 1, wobei D50, das eine durchschnittliche Teilchengröße des Siliziumdioxids darstellt, von 5 bis 350 µm beträgt.

3. Verfahren zur Herstellung von Glasrohstoffgranalien nach Anspruch 2, wobei, wenn der Wert von D50 des Siliziumdioxids durch x (µm) dargestellt wird, der Gehalt y (Massen-%) des Alkalimetallhydroxids an der Feststoffmasse der Glasrohstoffzusammensetzung (A) y≤4,6 - 0,0071x erfüllt.

4. Verfahren zur Herstellung von Glasrohstoffgranalien nach Anspruch 1, wobei D50, das eine durchschnittliche Teilchengröße des Siliziumdioxids darstellt, von 200 bis 350 µm beträgt und der Gehalt des Alkalimetallhydroxids an der Feststoffmasse der Glasrohstoffzusammensetzung (A) von 0,4 bis 2,1 Massen-% beträgt.

5. Verfahren zur Herstellung von Glasrohstoffgranalien nach Anspruch 1, wobei D50, das eine durchschnittliche Teilchengröße des Siliziumdioxids darstellt, von 5 bis 50 µm beträgt und der,Gehalt des Alkalimetallhydroxids an der Feststoffmasse der Glasrohstoffzusammensetzung (A) von 0,8 bis 4,2 Massen-% beträgt.

6. Verfahren zur Herstellung von Glasrohstoffgranalien nach einem der Ansprüche 1 bis 5, wobei eine Glasrohstoffzusammensetzung verwendet wird, wobei die Zusammensetzung von Glas, dargestellt durch Massen-% bezogen auf Oxide, SiO₂ in einem Gehalt von 55 bis 75 Massen-%, Al₂O₃ in einem Gehalt von 3 bis 25 Massen-%, mindestens ein Element ausgewählt aus der Gruppe bestehend aus Li₂O, Na₂O und K₂O in einem Gehalt von insgesamt 10 bis 20 Massen-% und mindestens ein Element ausgewählt aus der Gruppe bestehend aus MgO, CaO, SrO und BaO in einem Gehalt von insgesamt 0 bis 25 Massen-% umfasst.

7. Verfahren zur Herstellung von Glasrohstoffgranalien nach einem der Ansprüche 1 bis 6, wobei das Alkalimetallhydroxid Natriumhydroxid enthält.

8. Verfahren zur Herstellung von Glasrohstoffgranalien nach einem der Ansprüche 1 bis 7, wobei D50, das eine durchschnittliche Teilchengröße der Glasrohstoffgranalien darstellt, 412 µm bis 2 mm beträgt.

9. Verfahren zur Herstellung von geschmolzenem Glas, das einen Schritt der Herstellung von Glasrohstoffgranalien durch das Verfahren nach einem der Ansprüche 1 bis 8 und einen Glasschmelzschritt des Erwärmens der erhaltenen Glasrohstoffgranalien, um geschmolzenes Glas zu bilden, aufweist.

10. Verfahren zur Herstellung von geschmolzenem Glas nach Anspruch 9, wobei der Glasschmelzschritt einen Schritt des Einbringens der Glasrohstoffgranalien auf die Flüssigkeitsoberfläche des geschmolzenen Glases in einem Schmelzofen aufweist.

11. Verfahren zur Herstellung von geschmolzenem Glas nach Anspruch 9, wobei der Glasschmelzschritt einen Schritt des Schmelzens der Glasrohstoffgranalien in einer Gasphasenatmosphäre, um geschmolzene Glasteilchen zu bilden, und einen Schritt des Sammelns der geschmolzenen Glasteilchen, um geschmolzenes Glas zu bilden, umfasst.

12. Verfahren zur Herstellung eines Glasgegenstandes unter Verwendung des Verfahrens zur Herstellung von geschmolzenem Glas nach einem der Ansprüche 9 bis 11, das den Glasschmelzschritt, einen Formschritt des Formens des erhaltenen geschmolzenen Glases und einen Glühschritt des Glühens des Glases nach dem Formen aufweist.

## Revendications

1. Procédé de production de granules de matière première de verre à partir d'une composition de matière première de verre comprenant au moins de la silice, une source d'aluminium et une source de métal alcalin, qui a une étape consistant à granuler une composition de matière première de verre (A) comprenant, tel que calculé en tant que teneur en solides, de 45 à 75 % en masse de silice, de 3 à 30 % en masse d'hydroxyde d'aluminium en tant que la source d'aluminium, et de 0,4 à 4,6 % en masse d'un hydroxyde de métal alcalin en tant que la source de métal alcalin, en présence d'eau.

2. Procédé de production de granules de matière première de verre selon la revendication 1, dans lequel D50 représentant une taille particulaire moyenne de la silice va de 5 à 350 µm.

3. Procédé de production de granules de matière première de verre selon la revendication 2, dans lequel lorsque la valeur de D50 de la silice est représentée par x (µm), la teneur y (% en masse) de l'hydroxyde de métal alcalin sur la masse de teneur en solides de la composition de matière première de verre (A) satisfait y≤4,6 - 0,0071x.

4. Procédé de production de granules de matière première de verre selon la revendication 1, dans lequel D50 représentant une taille particulaire moyenne de la silice va de 200 à 350 µm, et la teneur en l'hydroxyde de métal alcalin sur la masse de teneur en solides de la composition de matière première de verre (A) va de 0,4 à 2,1 % en masse.

5. Procédé de production de granules de matière première de verre selon la revendication 1, dans lequel D50 représentant une taille particulaire moyenne de la silice va de 5 à 50 µm, et la teneur en l'hydroxyde de métal alcalin sur la masse de teneur en solides de la composition de matière première de verre (A) va de 0,8 à 4,2 % en masse.

6. Procédé de production de granules de matière première de verre selon l'une quelconque des revendications 1 à 5, dans lequel une composition de matière première de verre est utilisée, moyennant quoi la composition du verre comprend, tel que représenté en % en masse basé sur des oxydes, SiO₂ dans une teneur de 55 à 75 % en masse, Al₂O₃ dans une teneur de 3 à 25 % en masse, au moins un élément sélectionné parmi le groupe constitué de LiO₂, Na₂O et K₂O dans une teneur au total de 10 à 20 % en masse, et au moins un élément sélectionné parmi le groupe constitué de MgO, CaO, SrO et BaO dans une teneur au total de 0 à 25 % en masse.

7. Procédé de production de granules de matière première de verre selon l'une quelconque des revendications 1 à 6, dans lequel ledit hydroxyde de métal alcalin contient de l'hydroxyde de sodium.

8. Procédé de production de granules de matière première de verre selon l'une quelconque des revendications 1 à 7, dans lequel D50 représentant une taille particulaire moyenne des granules de matière première de verre va de 412 µm à 2 mm.

9. Procédé de production de verre fondu, qui a une étape consistant à produire des granules de matière première de verre par le procédé tel que défini dans l'une quelconque des revendications 1 à 8, et une étape de fonte de verre consistant à chauffer les granules de matière première de verre obtenus pour former du verre fondu.

10. Procédé de production de verre fondu selon la revendication 9, dans lequel l'étape de fonte de verre a une étape consistant à introduire les granules de matière première de verre sur la surface liquide de verre fondu dans un four de fusion.

11. Procédé de production de verre fondu selon la revendication 9, dans lequel l'étape de fonte de verre comprend une étape consistant à faire fondre les granules de matière première de verre dans une atmosphère à phase gazeuse pour former des particules de verre fondu, et une étape consistant à rassembler les particules de verre fondu pour former du verre fondu.

12. Procédé de production d'un article en verre en utilisant le procédé de production de verre fondu tel que défini dans l'une quelconque des revendications 9 à 11, qui a l'étape de fonte de verre, une étape de gaufrage consistant à gaufrer le verre fondu obtenu et une étape de recuit consistant à recuire le verre après gaufrage.
